# EUROPÄISCHE PATENTANMELDUNG

(11) **EP 1 602 541 A1**
(43) Veröffentlichungstag der Anmeldung: **07.12.2005**
(21) Anmeldenummer: 05011762.1
(22) Anmeldetag: 31.05.2005
(51) Int. Cl.: B60S 5/02

(54) **Tankstelle, insbesondere Wasserstoff-Tankstelle**

(30) Priorität: 03.06.2004 DE 102004026981
(71) Anmelder: Linde Aktiengesellschaft, 65189 Wiesbaden (DE)
(72) Erfinder: Odebrecht, Richella, 71069 Sindelfingen (DE); Tomforde, Henning, 71069 Sindelfingen (DE)
(74) Vertreter: Zahn, Christoph

(57) **Zusammenfassung**

Es wird eine Tankstelle zum Betanken eines Fahrzeuges mit einem gasförmigen und/oder flüssigen Medium, insbesondere mit Erdgas oder gasförmigem und/oder flüssigem Wasserstoff, aufweisend wenigstens eine Betankungsvorrichtung, die zu entsprechenden, in den zu betankenden Fahrzeugen vorgesehenen Aufnahmevorrichtungen korrespondiert, beschrieben.

Erfindungsgemäß ist die Betankungsvorrichtung (2, 2', ...) von den zu betankenden Fahrzeugen (1) überfahrbar angeordnet und/oder unter die zu betankenden Fahrzeuge (1) verfahrbar.

## Beschreibung

Die Erfindung betrifft eine Tankstelle zum Betanken eines Fahrzeuges mit einem gasförmigen und/oder flüssigen Medium, insbesondere mit Erdgas oder gasförmigem und/oder flüssigem Wasserstoff, aufweisend wenigstens eine Betankungsvorrichtung, die zu entsprechenden, in den zu betankenden Fahrzeugen vorgesehenen Aufnahmevorrichtungen korrespondiert.

Unter dem Begriff "Fahrzeug" seien nachfolgend alle denkbaren Fahrzeugtypen, wie Pkws, Lkws, Busse, Arbeitsmaschinen, Lokomotiven, etc., die mit gasförmigen und/oder flüssigen Medien betankt werden, zu verstehen.

Herkömmliche Tankstellen, die der Betankung von Fahrzeugen mit Benzin und Diesel dienen, sind hinlänglich bekannt. Bekannt sind femer Tankstellen, in denen so genannte Erdgas-Fahrzeuge mit komprimiertem Erdgas, das unter einem Druck bis zu 400 bar vorliegt, betankt werden. Gegenwärtig werden bereits Erdgas-Tankstellen projektiert, bei denen das Erdgas mit Drücken bis zu 1000 bar gespeichert und dem zu betankendem Fahrzeug zugeführt wird.

Des Weiteren sind bisher ca. 20 Tankstellen weltweit realisiert worden, in denen entsprechend modifizierte Fahrzeuge mit gasförmigem und/oder flüssigem Wasserstoff betankt werden können. In diesen, nachfolgend als Wasserstoff-Tankstellen bezeichneten Tankstellen wird der gasförmige und/oder flüssige Wasserstoff mittels geeigneter Betankungskupplungen in das zu betankende Fahrzeug überführt.

Aufgrund der bisherigen Fahrzeugkonstruktionen erfolgt das Verbinden der tankstellenseitigen Betankungsvorrichtung mit der dazu korrespondierenden Aufnahmevorrichtung des zu betankenden Fahrzeuges ausschließlich seitlich am Fahrzeug. Bei herkömmlichen Tankstellen wird hierbei die Zapfpistole in den korrespondierenden Tankstutzen des zu betankenden Fahrzeuges eingeführt, während bei Erdgas- sowie Wasserstoff-Tankstellen entsprechende Kupplungsstecker in korrespondierende, am Fahrzeug angeordnete Betankungsdosen eingeführt und mit diesen formschlüssig verbunden werden.

Ein weiteres Problem bei herkömmlichen Tankstellen besteht darin, dass die zu betankenden Fahrzeuge aufgrund der Tatsache, dass sie entweder links- oder rechtsseitige Tanksstutzen bzw. Kupplungsdosen aufweisen, folglich entsprechend zu der Zapfsäule bzw. Betankungsvorrichtung positioniert werden müssen.

Aufgrund unterschiedlicher Überlegungen, wie einfachere und schnellere Bedienbarkeit, Sicherheitsanforderungen, etc., wird man insbesondere bei Wasserstoff-Tankstellen zu automatischen Betankungsvorgängen übergehen. Dies bedeutet, dass das Zusammenführen bzw. -fügen von Kupplungsstecker und Kupplungsdose automatisch erfolgt, ohne dass es hierzu eines Eingriffes durch den Fahrer und/oder des Bedienpersonales bedarf.

Aufgabe der vorliegenden Erfindung ist es, eine gattungsgemäße Tankstelle zum Betanken eines Fahrzeuges mit einem beliebigen gasförmigen und/oder flüssigen Medium, insbesondere mit Erdgas oder gasförmigem und/oder flüssigem Wasserstoff, anzugeben, die die Nachteile bekannter Tankstellen-Konzepte vermeidet bzw. überwindet.

Zur Lösung dieser Aufgabe wird eine Tankstelle vorgeschlagen, die dadurch gekennzeichnet ist, dass die Betankungsvorrichtung von den zu betankenden Fahrzeugen überfahrbar angeordnet und/oder unter die zu betankenden Fahrzeuge verfahrbar ist.

In völliger Abkehr von dem bisher realisierten Betankungsprinzip "seitliches Betanken" wird nunmehr erfindungsgemäß das Betanken dadurch realisiert, dass das zu betankende Fahrzeug über die Betankungsvorrichtung fährt oder verfahren wird oder die Betankungsvorrichtung unter das zu betankende Fahrzeug fährt oder verfahren wird.

Die Erfindung setzt voraus, dass die mittels der erfindungsgemäßen Tankstelle zu betankenden Fahrzeuge auf ihrer Unterseite eine Aufnahmevorrichtung - Einfüllstutzen, Kupplungsdose, etc. - für die Betankungsvorrichtung der erfindungsgemäßen Tankstelle aufweisen.

Die erfindungsgemäße Tankstelle weiterbildend wird vorgeschlagen, dass der Betankungsvorrichtung Mittel zum Positionieren der zu betankenden Fahrzeuge über der Betankungsvorrichtung zugeordnet sind.

Hierbei sind die vorgenannten Mittel zum Positionieren der zu betankenden Fahrzeuge bspw. als Fördervorrichtung, die von den zu betankenden Fahrzeug befahren werden kann, ausgebildet.

Gemäß einer weiteren vorteilhaften Ausgestaltung der erfindungsgemäßen Tankstelle weist die Betankungsvorrichtung Mittel zum automatischen Positionieren an der Aufnahmevorrichtung der zu betankenden Fahrzeuge auf und/oder der Betankungsvorrichtung sind Mittel zum automatischen Positionieren an der Aufnahmevorrichtung der zu betankenden Fahrzeuge zugeordnet.

Denkbar ist somit, sowohl die Betankungsvorrichtungen selbst mit entsprechenden Mitteln zum automatischen Positionieren zu versehen als auch getrennt von den eigentlichen Betankungsvorrichtungen derartige Mittel vorzusehen, die dann wiederum mit den Betankungsvorrichtungen in Verbindung stehen und diese entsprechend ansteuern.

Durch die Betankung eines Fahrzeuges über dessen Unterseite kann sichergestellt werden, dass der Fahrer des zu betankenden Fahrzeuges in keinen unmittelbaren Kontakt mit der eigentlichen Betankungsvorrichtung kommt. Dadurch können mögliche Fehlbedienungen durch den Fahrer und/oder das Bedienpersonal vermieden werden. Insbesondere bei der Betankung von Fahrzeugen mit unter hohem Druck stehendem Erdgas sowie mit gasförmigem und/oder flüssigem Wasserstoff ermöglicht das erfindungsgemäße Tankstellen-Konzept eine deutliche Erhöhung der Sicherheit.

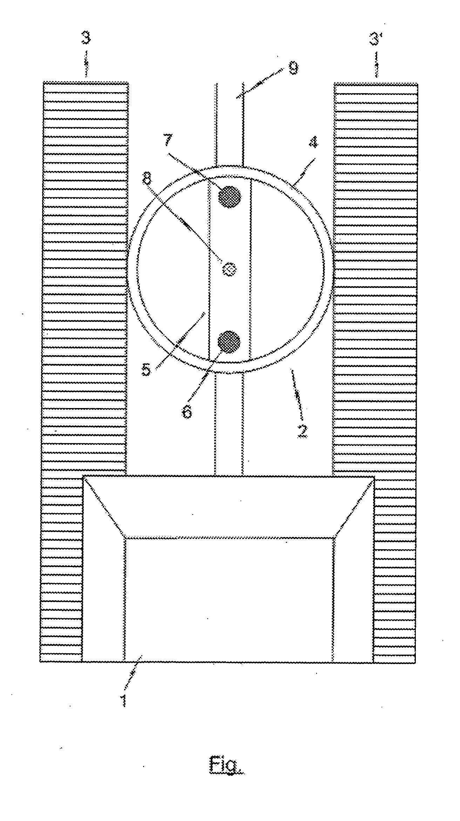

Die erfindungsgemäße Tankstelle sowie weitere Ausgestaltung derselben, die Gegenstände der abhängigen Patentansprüche darstellen, seien nachfolgend anhand des in der Figur dargestellten Ausführungsbeispieles näher erläutert.

Die Figur zeigt einen Ausschnitt aus einer möglichen Ausgestaltungsform der erfindungsgemäßen Tankstelle, wobei ein Fahrzeug 1 - dargestellt ist lediglich dessen vorderer Bereich - mittel eines Förderbandes 3 und 3' über die eigentliche Betankungsvorrichtung 2 verfahren wird. Die Betankungsvorrichtung 2 ist in Form eines zwischen den Fördervorrichtungen bzw. -bändern 3 und 3' auf einer Schiene 9 verfahrbaren Schlittens 4 ausgebildet. Der Schlitten 4 weist eine zylindrische Form auf und ist mit einer Traverse 5 versehen. Diese beinhaltet zwei Kupplungsstecker 6 und 7, über die gasförmiger und flüssiger Wasserstoff dem zu betankenden Fahrzeug zugeführt werden kann.

Die Betankungsvorrichtung 2 kann nunmehr von dem zu betankenden Fahrzeugen 1 überfahrbar angeordnet und/oder unter die zu betankenden Fahrzeuge 1 verfahrbar ausgebildet sein.

Die Kupplungsstecker 6 und 7 werden - sobald das zu betankende Fahrzeug 1 in der gewünschten Position zu der Betankungsvorrichtung 2 bzw. zu dem Schlitten 4 angeordnet ist - ausgefahren und mit den korrespondierenden Kupplungsdosen des zu betankenden Fahrzeuges 1 formschlüssig verbunden.

Die Traverse 5 kann um den Drehpunkt 8 innerhalb des Schlittens 4 um 360° rotieren, so dass die vorerwähnten Kupplungsstecker 6 und 7 jede Position am Unterboden des zu betankenden Fahrzeuges 1 erreichen können.

Eine automatische Positionierung der Betankungsvorrichtung 2 bzw. des Schlittens 4 relativ zu dem zu betankenden Fahrzeug 1 kann auf unterschiedliche Arten erreicht werden. Die unterschiedlichen Möglichkeiten sind dem Fachmann jedoch bekannt, so dass auf sie im Folgenden nicht näher eingegangen wird.

In vorteilhafter Weise ist der Betankungsvorrichtung 2 bzw. den Kupplungsstecker 6 und 7 eine Reinigungsvorrichtung, die der Säuberung der Kupplungsstecker 6 und 7 und ggf. der zu ihnen korrespondierenden Kupplungsdosen dient, zugeordnet.

Bei der automatischen Positionierung der Betankungsvorrichtung 2 relativ zu dem zu betankenden Fahrzeug 1 ist erfindungsgemäß nunmehr lediglich eine Positionierung in zwei Achsen erforderlich.

Bei den bisher realisierten seitlichen Betankungsvorgängen war für eine automatische Positionierung hingegen eine Ausrichtung in drei Achsen erforderlich. Das automatische Positionieren der Betankungsvorrichtung 2 relativ zu dem zu betankenden Fahrzeug 1 wird somit bei dem erfindungsgemäßen Tankstellen-Konzept deutlich vereinfacht.

Bei der erfindungsgemäßen Tankstelle können die bisher erforderlichen Zapfsäulen entfallen. Zudem kann ein Betankungs-Konzept ähnlich einer automatischen Waschstraße realisiert werden, indem die zu betankenden Fahrzeuge mittels einer entsprechenden Fördervorrichtung über die Betankungsvorrichtung(en), die mit dem zu betankenden Fahrzeugen mitfährt bzw. mitfahren, verfahren werden.

## Patentansprüche

1. Tankstelle zum Betanken eines Fahrzeuges mit einem gasförmigen und/oder flüssigen Medium, insbesondere mit Erdgas oder gasförmigem und/oder flüssigem Wasserstoff, aufweisend wenigstens eine Betankungsvorrichtung, die zu entsprechenden, in den zu betankenden Fahrzeugen vorgesehenen Aufnahmevorrichtungen korrespondiert, **dadurch gekennzeichnet, dass** die Betankungsvorrichtung (2, 2', ...) von den zu betankenden Fahrzeugen (1) überfahrbar angeordnet und/oder unter die zu betankenden Fahrzeuge (1) verfahrbar ist.

2. Tankstelle nach Anspruch 1, **dadurch gekennzeichnet, dass** der Betankungsvorrichtung (2, 2', ...) Mittel zum Positionieren der zu betankenden Fahrzeuge (1) über der Betankungsvorrichtung (2, 2', ...) zugeordnet sind.

3. Tankstelle nach Anspruch 2, **dadurch gekennzeichnet, dass** die Mittel zum Positionieren der zu betankenden Fahrzeuge (1) als von den zu betankenden Fahrzeugen (1) befahrbare Fördervorrichtung (3, 3', ...) ausgebildet sind.

4. Tankstelle nach einem der Ansprüche 1 bis 3, **dadurch gekennzeichnet, dass** die Betankungsvorrichtung (2, 2', ...) Mittel zum automatischen Positionieren an den Aufnahmevorrichtungen der zu betankenden Fahrzeuge (1) aufweist und/oder der Betankungsvorrichtung (2, 2', ...) Mittel zum automatischen Positionieren an den Aufnahmevorrichtungen der zu betankenden Fahrzeuge (1) zugeordnet sind.

5. Tankstelle nach einem der Ansprüche 1 bis 4, **dadurch gekennzeichnet, dass** der Betankungsvorrichtung (2, 2', ...) eine Reinigungsvorrichtung zugeordnet ist.

6. Tankstelle nach einem der Ansprüche 1 bis 5, **dadurch gekennzeichnet, dass** die oder zumindest eine der Betankungsvorrichtungen (2) als ein Schlitten (4), vorzugsweise ein verfahrbarer Schlitten (4), ausgebildet ist.
